# EUROPÄISCHE PATENTSCHRIFT

(11) **EP 3 176 806 B1**
(45) Veröffentlichungstag und Bekanntmachung des Hinweises auf die Patenterteilung: **11.01.2023**
(21) Anmeldenummer: 16196976.1
(22) Anmeldetag: 03.11.2016
(51) Int. Cl.: H01H 71/08, H01H 71/02, H01H 11/00

(54) **SCHALTER MIT AUFEINANDER AUFSTECKBAREN MODULEN**
SWITCH WITH PLUG-IN MODULES
COMMUTATEUR AVEC DES MODULES ENFICHABLES

(30) Priorität: 01.12.2015 DE 102015223882
(43) Veröffentlichungstag der Anmeldung: 07.06.2017
(73) Patentinhaber: Siemens Aktiengesellschaft, 80333 München (DE)
(72) Erfinder: Grasnick, Steffen, 15517 Fürstenwalde (DE)

(56) Entgegenhaltungen:
- US-A- 5 652 420
- US-A1- 2014 126 158

## Beschreibung

Die Erfindung betrifft eine Anordnung mit einem Schalter zum Schalten von Leistungen gemäß dem Oberbegriff des Anspruchs 1.

Insbesondere Niederspannungsleistungsschalter sind bekannt und verfügen über ein eigenes Gehäuse, an dem ein Anschlussmodul angeordnet ist. Am Anschlussmodul sind elektrische Leitungen angeschlossen, welche ins Schalterinnere führen, in dem verschiedene elektrische Komponenten vorhanden sind. Das Anschlussmodul ist häufig als Kontaktleiste ausgeführt, deren Kontakte von außen zugänglich sind. Über die Kontakte sind also anschlussmäßig elektrische Verbindungen ins Schalterinnere herstellbar. Auf das Anschlussmodul kann ein Handsteckermodul aufgesteckt werden, das entsprechende Komplementär-Kontakte aufweist, die mit den Kontakten des Anschlussmoduls kontaktieren. An dem Handsteckermodul sind ebenfalls elektrische Leitungen angeschlossen, welche elektrische Verbindungen zu externen Geräten und Einheiten herstellen.

Bei heutigen Leistungsschaltern ist es mehr und mehr erforderlich, Kommunikationsmöglichkeiten in den Leistungsschalter zu integrieren. Insbesondere ist eine einfache Erweiterbarkeit mittels aktueller Kommunikationselektronik gewünscht, ohne einen neuen Leistungsschalter kaufen zu müssen.

Aus der US 5 652 420 A ist es bekannt, zwischen dem Anschlussmodul und dem auf das Anschlussmodul aufsteckbaren Handsteckermodul mittels entsprechender Steckkontakte ein Kommunikationsmodul zu schalten, das Elektronik zur Kommunikation umfasst, wobei die drei Module aufeinander aufsteckbar sind.

Die Aufgabe der Erfindung ist es, eine Anordnung mit einem Schalter zum Schalten von Leistungen anzugeben, der über ein Handsteckermodul (einen aufsteckbaren Handstecker) mit Anschlussmodulen des Kunden verbindbar ist und in Bezug auf Kommunikationselektronik einfach erweiterbar ist.

Die Aufgabe wird durch die Merkmale des Anspruchs 1 gelöst; die Unteransprüche stellen vorteilhafte Ausgestaltungen dar. Die Lösung sieht vor, dass das Kommunikationsmodul (4c) als Kommunikationsadapter (4a) ausgebildet und die Kommunikationselektronik auf den Kommunikationsadapter aufsteckbar ist, was einen einfachen Wechsel und/oder eine einfache Erweiterung der Kommunikationselektronik ermöglicht.

Die Lösung sieht auch vor, dass der Kommunikationsadapter auf gegenüberliegenden voneinander abgewandten Kontaktseiten jeweils die ersten und die zweiten Kontakte aufweist, wobei die Kommunikationselektronik auf einer der beiden Seiten, die quer zu den Kontaktseiten (von vorn auf den Schalter gesehen auf der Schaltervorderseite oder auf der Schalterrückseite) verlaufen, am Kommunikationsadapter angeordnet ist.

Eine einfache und sichere Ausführung wird erzielt, wenn die Module als Kontaktleisten ausgebildet sind, die zumindest auf einer Seite Kontakte aufweisen.

Eine stabile und elektrisch sichere Verbindung lässt sich erzielen, wenn die ersten Kontakte der Kontaktleisten als Messerkontakte ausgebildet sind.

Um die Einschiebbarkeit des Schalters in einen Einschubrahmen eines Schaltschranks auf einfache Art und Weise zu ermöglichen, wird vorgeschlagen, dass der Kommunikationsadapter aus zwei elektrisch miteinander verbundenen leistenförmigen Trägern gebildet ist, wobei über den am Schalter fest angeordneten ersten Träger die elektrischen Verbindungen ins Schalterinnere erfolgen und wobei das Handsteckermodul auf den zweiten Träger aufsteckbar ist, der fest an einem Einschubrahmen angeordnet ist und die Kommunikationselektronik trägt, wobei der Einschubrahmen in einem Schaltschrank angeordnet ist.

Eine weitere Vereinfachung ergibt sich, wenn der Schalter in den Einschubrahmen einschiebbar ist und die beiden leistenförmigen Träger beim Einschieben miteinander kontaktieren.

Nachfolgend wird die Erfindung anhand einer Zeichnung beispielhaft beschrieben. Es zeigen:
- Fig. 1: eine Anordnung mit einem Schalter zum Schalten von Leistungen im Niederspannungsbereich einschließlich Kommunikationselektronik,
- Fig. 2: die Anordnung gemäß Fig. 1 als Ausschnitt mit den Modulen in einer vergrößerten Darstellung,
- Fig. 3: die Module gemäß Fig. 2 in einer Explosionsdarstellung,
- Fig. 4: den Schalter gemäß Fig. 1 eingeschoben in einen Einschubrahmen,
- Fig. 5: den Schalter gemäß Fig. 4 etwas aus dem Einschubrahmen herausgezogen Zustand und
- Fig. 6: die Anordnung gemäß Fig. 5 als Ausschnitt mit den Modulen in einer vergrößerten Darstellung.

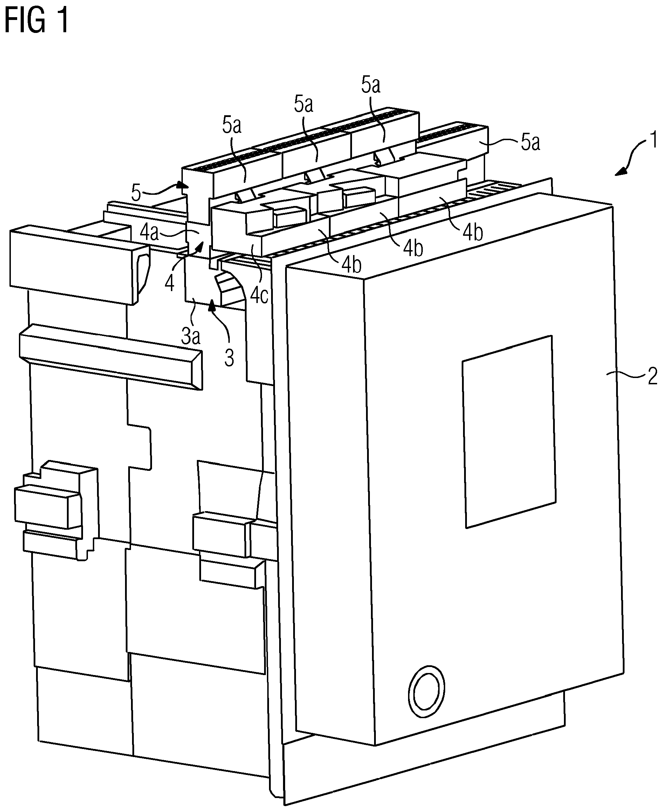

Fig. 1 zeigt eine Anordnung 1, die aus einem Schalter 2 und aus am Schalter 2 angeordneten Modulen 3, 4, 5 besteht, wobei in Fig. 1 speziell vier Module 3 in einer Reihe längs nebeneinander, darüber in Fig. 1 auf der linken Seite drei Module 4 und über den Modulen 4 je ein Modul 5 angeordnet sind. Ganz auf der rechten Seite ist auf dem Modul 3 nur ein Modul 5 angeordnet. Alle drei Module 3, 4, 5 sind hier als Kontaktleisten ausgebildet.

Jedes über einem Modul 3 oder 4 angeordnetes Modul 4 bzw. 5 ist jeweils auf diesem aufgesteckt. Alle hier als Kontaktleisten ausgebildete Module 3, 4, 5 weisen erste und/oder zweite elektrische Kontakte auf, wobei die ersten Kontakte K1 als Messerkontakte KM und die zweiten Kontakte als zu den Messerkontakten KM komplementäre Kontakte (Komplementär-Kontakte) ausgebildet sind. Bei aufgestecktem Modul 4, 5 kontaktieren jeweils erste Kontakte des aufnehmenden Moduls 3, 4 mit zweiten Kontakten des auf diesem (direkt) aufgesteckten Moduls 4, 5.

Die Module 3 sind speziell als Anschlussmodule 3a, die Module 4 als Kommunikationsmodule 4c und die Module 5 als Handsteckermodule 5a ausgebildet.

Von den am Schalter 2 angeordneten Anschlussmodulen 3a führen elektrische Leitungen ins Schalterinnere, wo sie mit elektrischen Komponenten des Schalters 2 verbunden sind (nicht gezeigt) .

Jedes Kommunikationsmodul 4c ist aus einem Kommunikationsadapter 4a und einer Kommunikationselektronik 4b gebildet, wobei die Kommunikationselektronik 4b am Kommunikationsadapter 4a angeordnet und elektrisch mit diesem verbunden ist.

An dem Handsteckermodul 5a sind elektrische Leitungen angeschlossen, die elektrische Verbindungen mit externen Geräten und Einheiten (alle nicht gezeigt) herstellen.

Das Handsteckermodul 5a kann sowohl auf dem Kommunikationsadapter 4a als auch auf das Anschlussmodul 3a aufgesteckt werden. In Fig. 1 sind die Handsteckermodule 5a auf der linken Seite jeweils auf einen Kommunikationsadapter 4a eines Kommunikationsmoduls 4c und auf der rechten Seite ist ein Handsteckermodul 5a direkt auf einem Anschlussmodul 3a aufgesteckt. Letzteres geht selbstverständlich nur, wenn kein Kommunikationsmodul 4c auf das Anschlussmodul 3a aufgesteckt ist. Das Kommunikationsmodul 4c kann damit auch nachträglich, z.B. wenn bezüglich der Kommunikation neue Anforderungen vorliegen, zwischengeschaltet (zwischengesteckt) werden, ohne dass dazu der Schalter 2 ausgetauscht werden muss.

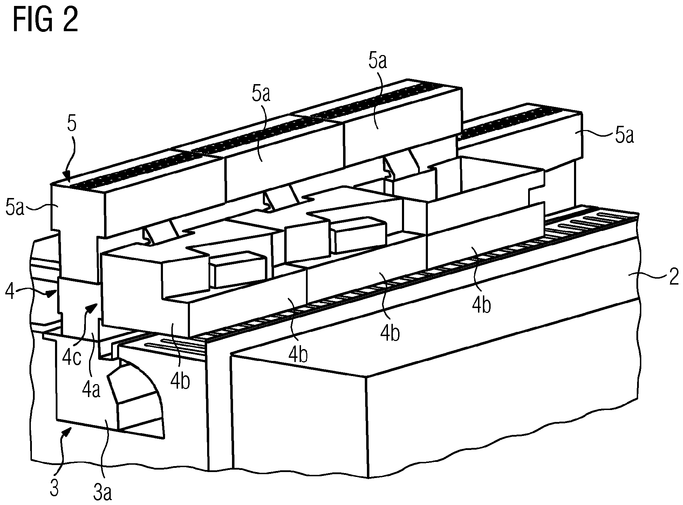

Fig. 2 zeigt einen Ausschnitt Anordnung gemäß Fig. 1 mit den Modulen 3, 4, 5 in einer vergrößerten Darstellung.

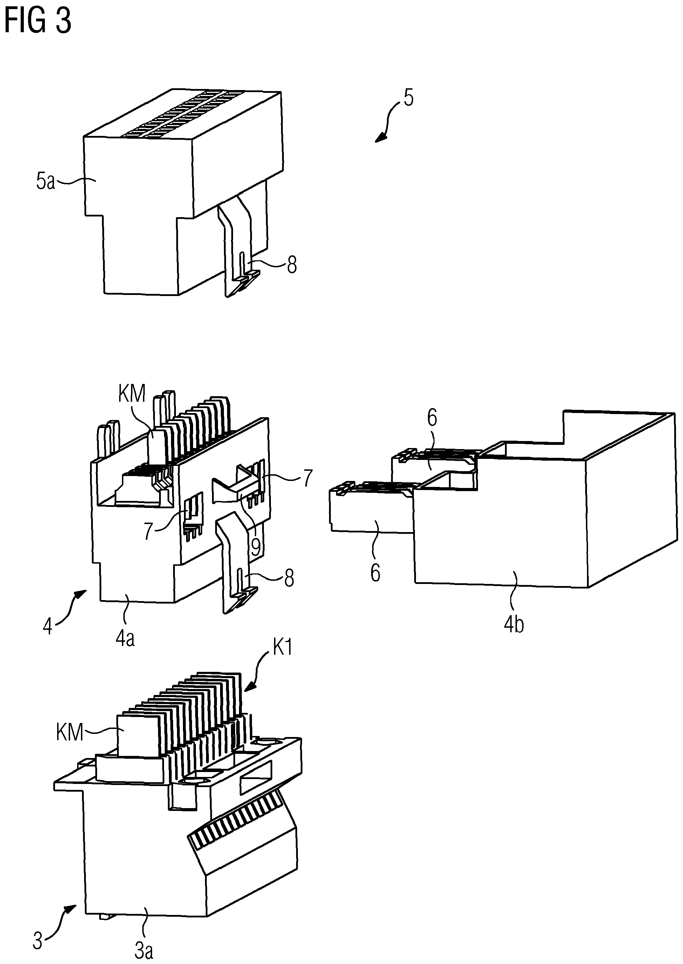

In Fig. 3 sind die drei Module 3, 4, 5 und die Kommunikationselektronik 4b aus Fig. 2 zum besseren Verständnis explosionsartig dargestellt. Man erkennt in Fig. 3, dass auch die Kommunikationselektronik jeweils auf den Adapter 4a aufgesteckt ist.

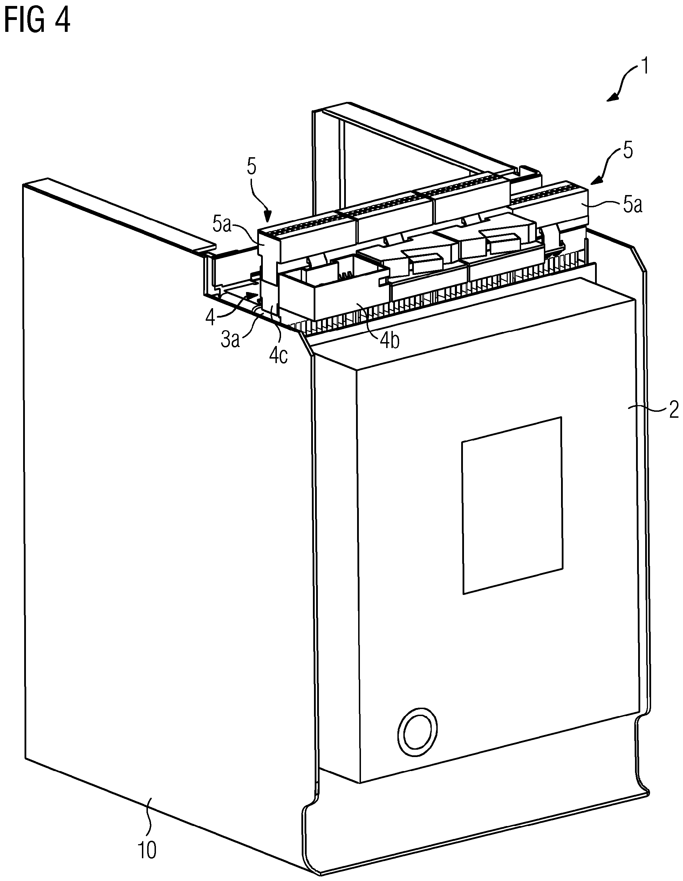

Fig. 4 zeigt den Schalter 2 eingeschoben in einen Einschubrahmen 10 eines Schaltschranks (nicht gezeigt), also in seiner Endstellung.

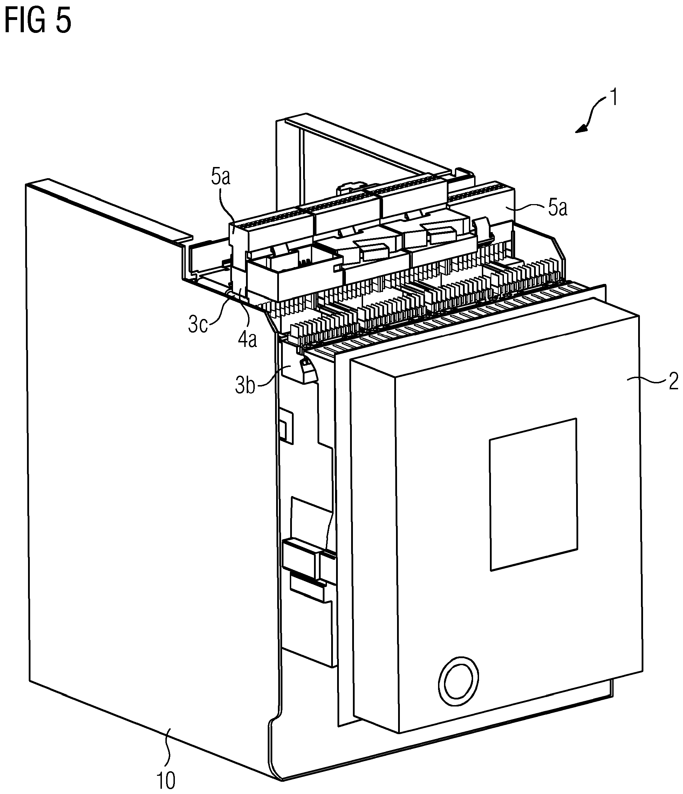

Fig. 5 zeigt den Schalter 2 noch nicht ganz in den Einschub 10 eingeschobenen (bzw. etwas aus dem Einschub 10 herausgezogen). Man erkennt, dass das Anschlussmodul 3a zweiteilig ausgeführt ist; es besteht aus zwei elektrisch miteinander verbundenen leistenförmigen Trägern 3b, 3c, die in Fig. 5 noch nicht und in Fig. 4 miteinander kontaktieren.

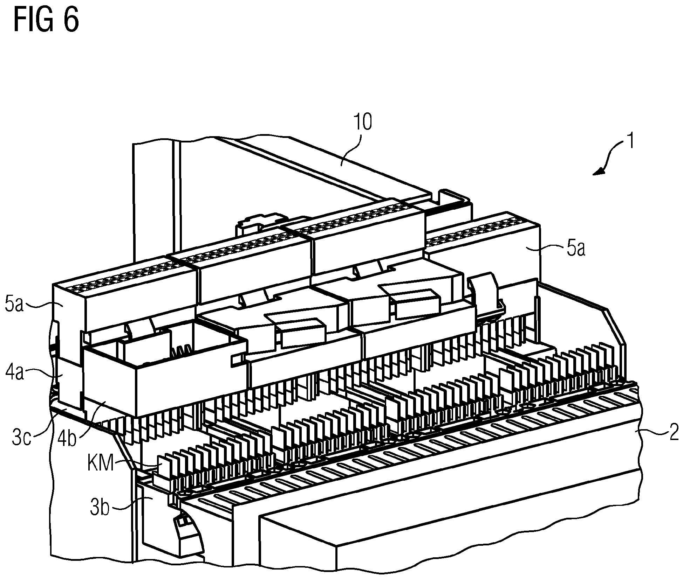

In Fig. 6 ist ein Ausschnitt der Anordnung 1 gemäß Fig. 5 mit den beiden Trägern 3b, 3c zum besseren Verständnis noch einmal vergrößert dargestellt.

## Patentansprüche

1. Anordnung (1) mit einem Schalter (2) zum Schalten von Leistungen im Niederspannungsbereich,
mit Modulen (3, 4, 5), die aufeinander aufsteckbar sind, wobei jeweils erste Kontakte (K1) des einen Moduls (3 oder 4) mit zweiten Kontakten des auf diesem aufgesteckten Moduls (4 oder 5) kontaktieren,
wobei ein erstes Modul (3) ein Anschlussmodul (3a) ist, von dem ausgehend anschlussmäßig elektrische Verbindungen ins Schalterinnere verlaufen und das nach außen hin erste Kontakte (K1) aufweist, und
wobei ein zweites Modul (5) ein mit seinen zweiten Kontakten auf das Anschlussmodul (3a) aufsteckbares Handsteckermodul (5a) ist, von dem ausgehend anschlussmäßig elektrische Verbindungen nach außen gehen,
wobei ein drittes Modul (4) ein Kommunikationsmodul (4c) ist, das eine Kommunikationselektronik (4b) umfasst und das auf einer Kontaktseite zweite Kontakte und auf der gegenüberliegenden abgewandten Kontaktseite erste Kontakte (K1) aufweist, wobei das Kommunikationsmodul (4c) mit seinen zweiten Kontakten auf das Anschlussmodul (3a) und das Handsteckermodul (5a) mit seinen zweiten Kontakten auf das Kommunikationsmodul (4c) aufsteckbar sind und wobei zweite Kontakte des Kommunikationsmoduls (4c) mit ersten Kontakten (K1) des Kommunikationsmoduls (4c) oder mit der Kommunikationselektronik (4b) elektrisch verbunden sind,
**dadurch gekennzeichnet,**
**dass** das Kommunikationsmodul (4c) als Kommunikationsadapter (4a) ausgebildet und die Kommunikationselektronik (4b) auf den Kommunikationsadapter (4a) aufsteckbar ist,
**dass** der Kommunikationsadapter (4a) auf gegenüberliegenden voneinander abgewandten Kontaktseiten jeweils die ersten (K1) und die zweiten Kontakte aufweist, wobei die Kommunikationselektronik (4b) auf einer der beiden Seiten, die quer zu den Kontaktseiten verlaufen, auf den Kommunikationsadapter (4a) aufsteckbar ist.

2. Anordnung (1) nach Anspruch 1,
**dadurch gekennzeichnet,**
**dass** die Module (3, 4, 5) als Kontaktleisten ausgebildet sind, die zumindest auf einer Seite Kontakte aufweisen.

3. Anordnung (1) nach Anspruch 2,
**dadurch gekennzeichnet,**
**dass** die ersten Kontakte (K1) der Kontaktleisten als Messerkontakte (KM) ausgebildet sind.

4. Anordnung (1) nach einem der Ansprüche 1 - 3,
**dadurch gekennzeichnet,**
**dass** das Anschlussmodul 3a aus zwei elektrisch miteinander verbundenen leistenförmigen Trägern (3b, 3c) gebildet ist, wobei über den am Schalter (2) fest angeordneten ersten Träger (3b) die elektrischen Verbindungen ins Schalterinnere erfolgen und wobei das Handsteckermodul (5a) auf den zweiten Träger (3c) aufsteckbar ist, der fest an einem Einschubrahmen (10) angeordnet ist und die Kommunikationselektronik (4b) trägt.

5. Anordnung (1) nach Anspruch 4,
**dadurch gekennzeichnet,**
**dass** der Schalter (2) in den Einschubrahmen (10) einschiebbar ist und die beiden Träger (3b, 3c) beim Einschieben miteinander kontaktieren.

## Claims

1. Arrangement (1) comprising a switch (2) for switching powers in the low-voltage range,
comprising modules (3, 4, 5) which are able to be plugged one onto the other, wherein first contacts (K1) of one module (3 or 4) each make contact with second contacts of the module (4 or 5) which is plugged on first said module,
wherein a first module (3) is a connection module (3a), electrical connections running into the switch interior starting from said connection module for connection purposes, and said connection module having first contacts (K1) to the outside, and
wherein a second module (5) is a manual plug module (5a) which is able to be plugged by way of its second contacts onto the connection module (3a), electrical connections passing to the outside starting from said manual plug module for connection purposes,
wherein a third module (4) is a communication module (4c) which comprises communication electronics (4b) and which has second contacts on one contact side and first contacts (K1) on the opposite averted contact side, wherein the communication module (4c) is able to be plugged by way of its second contacts onto the connection module (3a) and the manual plug module (5a) is able to be plugged by way of its second contacts onto the communication module (4c) and wherein second contacts of the communication module (4c) are electrically connected to first contacts (K1) of the communication module (4c) or to the communication electronics (4b),
**characterized**
**in that** the communication module (4c) is in the form of a communication adapter (4a) and the communication electronics (4b) are able to be plugged onto the communication adapter (4a),
**in that** the communication adapter (4a) respectively has the first contacts (K1) and the second contacts on opposite contact sides which are averted from one another, wherein the communication electronics (4b) are able to be plugged onto the communication adapter (4a) on one of the two sides which run transverse to the contact sides.

2. Arrangement (1) according to Claim 1,
**characterized**
**in that** the modules (3, 4, 5) are in the form of contact strips which have contacts at least on one side.

3. Arrangement (1) according to Claim 2,
**characterized**
**in that** the first contacts (K1) of the contact strips are in the form of blade contacts (KM).

4. Arrangement (1) according to one of Claims 1 to 3,
**characterized**
**in that** the connection module (3a) is formed from two strip-like supports (3b, 3c) which are electrically connected to one another, wherein the electrical connections into the switch interior are made by means of the first support (3b) which is fixedly arranged on the switch (2) and wherein the manual plug module (5a) is able to be plugged onto the second support (3c) which is fixedly arranged on a withdrawable rack (10) and supports the communication electronics (4b).

5. Arrangement (1) according to Claim 4,
**characterized**
**in that** the switch (2) is able to be inserted into the withdrawable rack (10) and the two supports (3b, 3c) make contact with one another during the insertion process.

## Revendications

1. Dispositif (1) avec un commutateur (2) pour commuter des puissances dans une zone de basse tension,
avec des modules (3, 4, 5) qui sont enfichables les uns sur les autres, dans lequel à chaque fois des premiers contacts (K1) d'un module (3 ou 4) entrent en contact avec des deuxièmes contacts du module (4 ou 5) enfiché sur celui-ci, dans lequel un premier module (3) est un module de raccordement (3a) à partir duquel des liaisons électriques en termes de connexion passent à l'intérieur du commutateur et qui présente vers l'extérieur des premiers contacts (K1), et
dans lequel un deuxième module (5) est un module de connecteur manuel (5a) enfichable avec ses deux contacts sur le module de raccordement (3a), à partir duquel des liaisons électriques en termes de connexion sortent à l'extérieur,
dans lequel un troisième module (4) est un module de communication (4c), qui comprend une électronique de communication (4b) et qui présente sur un côté de contact des deuxièmes contacts et sur le côté de contact opposé faisant face des premiers contacts (K1),
dans lequel le module de communication (4c) est enfichable avec ses deuxièmes contacts sur le module de raccordement (3a) et le module de connecteur manuel (5a) est enfichable avec ses deuxièmes contacts sur le module de communication (4c) et dans lequel des deuxièmes contacts du module de communication (4c) sont reliés électriquement avec des premiers contacts (K1) du module de communication (4c) ou avec l'électronique de communication (4b),
**caractérisé en ce que** le module de communication (4c) est conçu comme un adaptateur de communication (4a) et l'électronique de communication (4b) est enfichable sur l'adaptateur de communication (4a),
**en ce que** l'adaptateur de communication (4a) présente sur des côtés de contact opposés les uns aux autres se faisant face à chaque fois les premiers (K1) et les deuxièmes contacts, dans lequel l'électronique de communication (4b) sur l'un des deux côtés, qui passent transversalement aux côtés de contact, est enfichable sur l'adaptateur de communication (4a).

2. Dispositif (1) selon la revendication 1, **caractérisé en ce que** les modules (3, 4, 5) sont conçus comme des réglettes de contact qui présentent des contacts au moins sur un côté.

3. Dispositif (1) selon la revendication 2, **caractérisé en ce que** les premiers contacts (K1) des réglettes de contact sont conçus comme des contacts en couteau (KM).

4. Dispositif (1) selon l'une des revendications 1 à 3, **caractérisé en ce que** le module de raccordement (3a) est formé de deux supports (3b, 3c) en forme de réglette reliés ensemble électriquement, dans lequel les liaisons électriques se produisent à l'intérieur du commutateur au moyen du premier support (3b) disposé fixement sur le commutateur (2) et dans lequel le module de connecteur manuel (5a) est enfichable sur le deuxième support (3c), qui est disposé fixement sur un cadre d'insertion (10) et porte l'électronique de communication (4b).

5. Dispositif (1) selon la revendication 4, **caractérisé en ce que** le commutateur (2) peut être inséré dans le cadre d'insertion (10) et les deux supports (3b, 3c) entrent en contact l'un avec l'autre lors de l'insertion.
